# EUROPEAN PATENT SPECIFICATION

(11) **EP 3 737 629 B1**
(45) Date of publication and mention of the grant of the patent: **08.12.2021**
(21) Application number: 19714822.4
(22) Date of filing: 10.01.2019
(51) Int. Cl.: B65G 69/32, B65G 69/00

(54) **TOP SEAL FOR A LOADING/UNLOADING DOCK, DOCK, DISTRIBUTION CENTRE AND METHOD THEREFOR**
OBERE ABDICHTUNG FÜR EIN BE-/ENTLADEDOCK, DOCK, VERTEILZENTRUM UND VERFAHREN DAFÜR
JOINT SUPÉRIEUR DESTINÉ À UN QUAI DE CHARGEMENT/DÉCHARGEMENT, QUAI ET CENTRE DE DISTRIBUTION, ET PROCÉDÉ ASSOCIÉ

(30) Priority: 11.01.2018 NL 2020267
(43) Date of publication of application: 18.11.2020
(73) Proprietor: STERTIL B.V., 9288 CA Kootstertille (NL)
(72) Inventor: STAPENSEA, Jan Bernard, 9076 HG St. Annaparochie (NL); FIJNVANDRAAT, Jan Willem, 8935 DG Leeuwarden (NL)
(74) Representative: Arnold & Siedsma
(86) International application number: PCT/NL2019/050014
(87) International publication number: WO 2019/139477

(56) References cited:
- EP-A1- 2 517 990
- WO-A1-2016/193398
- WO-A2-2017/210707
- IE-B2- S86 282
- US-A- 4 554 768
- US-A- 5 442 825
- US-A1- 2017 190 522

## Description

The present invention relates to a top seal for a loading/unloading dock. These docks are often provided at distribution centres to enable sending and/or receiving loads, including packages, parcels, consumable materials and finished products. Such dock is specifically designed to receive a truck or a trailer for loading and/or unloading. A dock may include a dock house, a dock leveller, a dock shelter and components thereof.

In practice, docks are often provided with a sloped driveway. Therefore, water on the roof of the truck or trailer flows towards the rear side of the truck or trailer. This water may end up in the dock, the distribution centre itself, may contact the goods that are loaded or unloaded, and may be a nuisance or discomfort to people working at the dock. Considering the significant surface area of the roof of the trailer or truck a significant amount of water may be transferred to the rear of the trailer or truck. This problem with water originating from the roof is also relevant without a sloped driveway as trailer edges are often bended thereby also directing water on the roof towards the rear of the trailer or truck.

US 9,783,378 B2 disclosed a loading dock rainshield with a header projecting from the building to support a downwardly looped central curtain with one or more baffles that spans the width of the heater and pushes rainwater off the trailer top as it backs into the bay/dock.

WO 2017/210707 A2 discloses an actuated head pad for loading dock.

A further problem with docks is that water falling from the rear of the truck or trailer may cause safety concerns. For example, this may involve slipping of people or equipment at the dock. Furthermore, in a cold store this water may even freeze, thereby creating a major safety concern.

Furthermore, conventional seals of docks are confronted with different vehicle heights, which in practice may lead to a rather ineffective sealing performance. This further contributes to the problem with the water originating from the roof of the vehicle.

An object of the present invention is to obviate or at least reduce some of the aforementioned problems to provide an effective top seal for loading/unloading docks.

This object is achieved with the top seal for a loading/unloading dock according to claim 1.

By providing a movable sealing element of the top seal that can be moved in a substantially vertical direction, height differences of vehicles, such as a trailer or truck, can be compensated. This provides a variable working height of the movable sealing element such that the top seal can be adapted to the vehicle height. In other words, the effective working height of the sealing element is in use adapted to the distance between the upper edge of the dock and the roof of the vehicle. According to the invention, the movable sealing element is activated by a drive. In a sealing position, the movable sealing element is moved downward towards the roof of the vehicle. After contacting the vehicle, a seal is effectively in place.

The movable sealing element is provided with contact elements that contact a vehicle that is docked at the dock. Preferably, the contact elements are made of a soft material, such as rubber, to prevent damaging the roof of the vehicle.

According to the present invention, the contact elements of the movable seal comprise one or more water sealing elements. By providing such water sealing elements, the water on the roof of the vehicle is prevented from reaching the rear side of the vehicle. This prevents the aforementioned problems associated with water falling from the rear of the vehicle. This improves safety and/or comfort of the dock.

According to the invention, the water sealing element comprises a water sealing strip. Providing such water sealing strip provides an effective means for preventing water from reaching the rear of the vehicle. Furthermore, providing such water sealing strip(s) prevents the top seal to float on the roof of the vehicle. This further improves the sealing performance even in presence of water on the roof of the vehicle.

According to the invention, the water sealing element has a V-shape or a curved shape configured to guide water sideways.

By providing a V-shape or a curved/bended shape, the water on the roof can be directed in a desired direction. For example, an effect of the invention is that the water on the roof is directed towards the sides of the roof of the vehicle. This is achieved according to the invention by extending the legs of the V-shape water sealing element sideways and towards the dock, i.e. at an angle with the drive direction of the vehicle at the dock. The water sealing elements are preferably shaped as water sealing strips. This provides an effective means to seal the top or upper part of the dock.

In a preferred embodiment of the present invention the contact elements comprise two to five, preferably three, water sealing elements, more preferably water sealing strips.

By providing more than one water sealing element, such as a water sealing strip, the sealing effect can be improved. More specifically, providing more than one, such as three, water sealing strips further improves the preventive blocking of water from passing through the top sealing and still reaching the rear of the vehicle.

In a further preferred embodiment of the present invention the top seal further comprises a contact sensor configured for detecting a contact of the contact elements with the roof of the vehicle.

By providing a contact sensor that is capable of sending a contact signal directly or indirectly to the drive of the top seal, the movement of the movable sealing element can be stopped. This provides an effective means to achieve a seal with sufficient sealing performance. In addition or as alternative to the contact sensor, a height sensor can be provided that determines the vehicle height and adjusts the movable sealing element accordingly.

In a further preferred embodiment of the present invention the drive is further configured for maintaining a contact pressure between the contact elements and the roof of the vehicle.

Maintaining a contact pressure between the contact elements and the roof of the vehicle guarantees an effective sealing. Preferably, the contact pressure is maintained within a sealing pressure range and/or is maintained substantially constant. In a presently preferred embodiment the pressure is monitored with the aforementioned contact sensor. This enables a feedback about the actual pressure and sealing performance and giving the opportunity to adjust the pressure. The actual contact pressure can be achieved by the drive involving the use of a weight, spring, compressor in case of an inflatable seal (part) and/or other suitable means. It was shown that the combination of sufficient (and continuous) contact pressure and the contact elements achieve an effective sealing performance. This effect was improved by using water sealing elements that have a V-shape or curved shape that guide water sideways. In addition to the improved sealing this combination of contact pressure and contact elements that guide water sideways also prevented water to enter the dock when the vehicle drives away from the dock. This further improves the sealing performance over the entire vehicle docking process.

In one of the presently preferred embodiments of the invention, the sealing element comprises an inflatable sealing.

By providing an inflatable seal, an effective adjustment of the effective working height of the seal to the vehicle height is achieved. The seal may be inflated with air by the drive of the top seal or can be filled with another appropriate medium. When deflating the inflatable seal to enable the vehicle to ride away from the dock, the medium in the inflated seal can be removed from the seal to the environment and/or can be stored in a storage facility.

In a further alternative embodiment of the present invention the sealing element comprises a roller seal.

By providing a roller seal an effective adjustment of the top seal to the vehicle height can be achieved. In one of the presently preferred embodiments the seal element comprises a spring element. This spring element renders movement of the movable sealing element efficient and effective. In fact, it sort of counterbalances the weight of the sealing element. In one of the embodiments of the invention, the sealing element is provided with a weight that in use engages the roof of the vehicle and that pulls or stretches the sealing element. The weight and the spring element are preferably combined in a single embodiment.

In a further preferred embodiment of the invention the sealing element comprises an insulated structure.

Providing an insulated structure provides a sealing and an insulating effect for the top seal. This further improves the performance of such top seal. The insulating structure can be provided by different configurations. For example, in one embodiment the insulated structure may comprise two or more layers with one or more air chambers separating the layers to provide an insulating effect. In another embodiment two or more layers of strips of aluminium, pvc, or other suitable material are separated with one or more chambers filled with air, insulating foam or other suitable insulating material. Preferably, the dimensions of the strips is such that the sealing element can be wound up. It will be understood that also further examples of suitable insulated structures can be envisaged in accordance to the present invention.

The invention further relates to a dock provided with a top seal and distribution centre provided with such dock and a top seal.

The dock and/or distribution centre provide the same effects and advantages as described in relation to the top seal.

In addition, in one of the presently preferred embodiments, the dock further comprises side seals and a bottom seal that are configured for providing a four-sided sealing assembly. Such sealing assembly fully seals the opening of the dock when loading/unloading a vehicle.

The invention further also relates to a method for providing a seal between an upper edge of a dock and a roof of a vehicle docked at the dock, according to claim 13.

Further advantages, features and details of the invention are elucidated on the basis of preferred embodiments thereof, wherein reference is made to the accompanying drawings, in which:
- figure 1 shows a dock with a docked vehicle comprising a top seal according to the invention in an open position;
- figure 2 shows the top seal of figure 1 in a sealing position;
- figures 3A-B show the top seal of figures 1 and 2;
- figure 4 shows an alternative embodiment of the top seal according to the invention; and
- figures 5A-B show the top seal of figure 4.

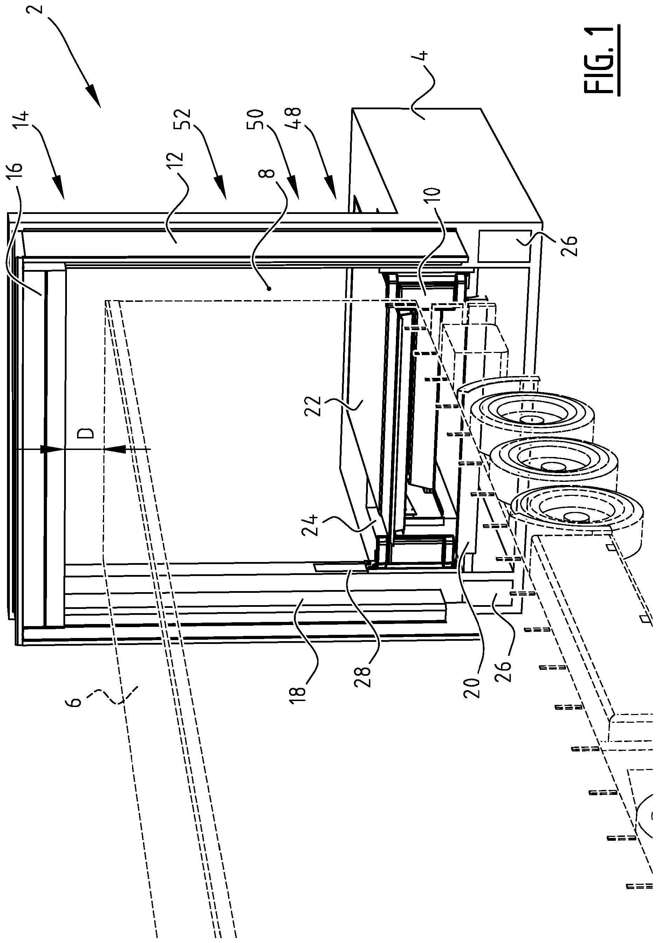

Dock 2 (figure 1) is part of distribution centre 4 and enables vehicle 6 to load/unload goods. Dock 2 comprises dock opening 8. In the illustrated embodiment opening 8 is further provided with two bumpers 10 at the sides thereof. Dock 2 further comprises dock shelter 12 and sealing assembly 14. In the illustrated embodiment sealing assembly 14 comprises top seal 16, two side seals 18, and bottom or lowest seal 20. Furthermore, in the illustrated embodiment dock 2 is provided with dock leveller 22 and two door recesses 24. In the illustrated embodiment dock 2 is further provided with additional stationary bumpers 26 and guiding members 28 that are configured for height adjustment of bumpers 10.

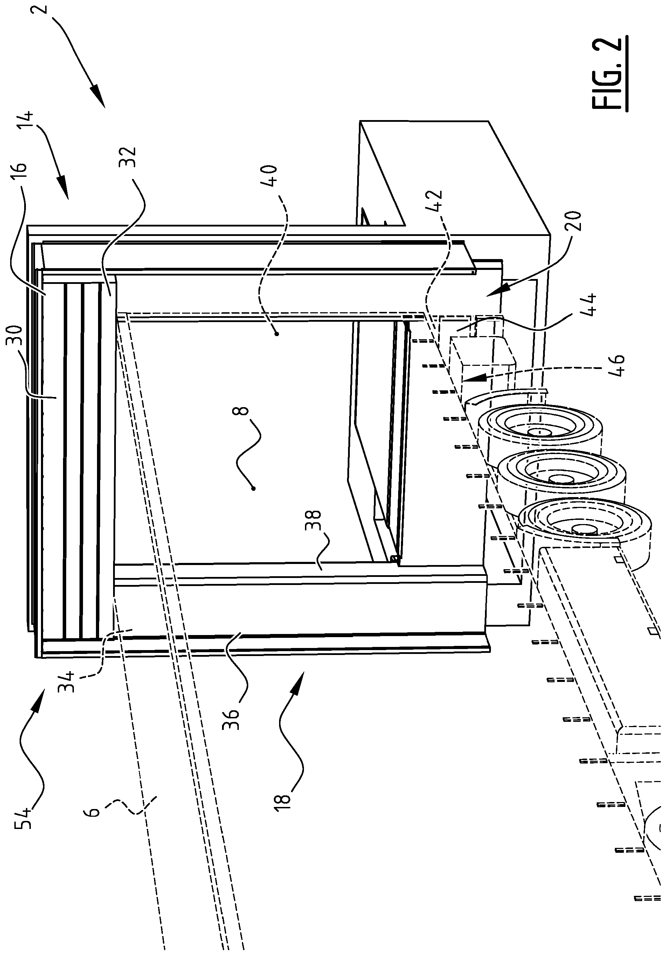

When vehicle 6 docks at dock 2 of distribution centre 4 a distance D (figure 1) between the top edge of opening 8 of dock 2 and the roof of vehicle 6 is present. In a sealing position top seal 16 with sealing element 30 closes this opening by moving movable sealing element 30 over distance D (figure 2). Movable sealing element 30 comprises contact elements 32 that in a sealing position contact roof 34 of vehicle 6. From side seal housing 36 side seal 18 extends in a substantially horizontal direction such that side seal elements 38 of side seals 18 move towards each other. In the extended position side seal elements 38 engage sides 40 of vehicle 6. After activating bottom seal 20, lower seal element 42 starts moving from a lower seal housing 44 until contacting bottom surface 46 of vehicle 6. In the illustrated embodiment this provides a four-sided seal between dock opening 8 and vehicle 6.

In the illustrated embodiment side seals are connected to centre 4 and connecting areas 48 thereof. Leveller 22 can be brought into loading/unloading position such that goods can be transferred between building 4 and storage space 50 of vehicle 6. Door recesses 24 are configured to receive vehicle doors 52 of vehicle 6 in the open position thereof.

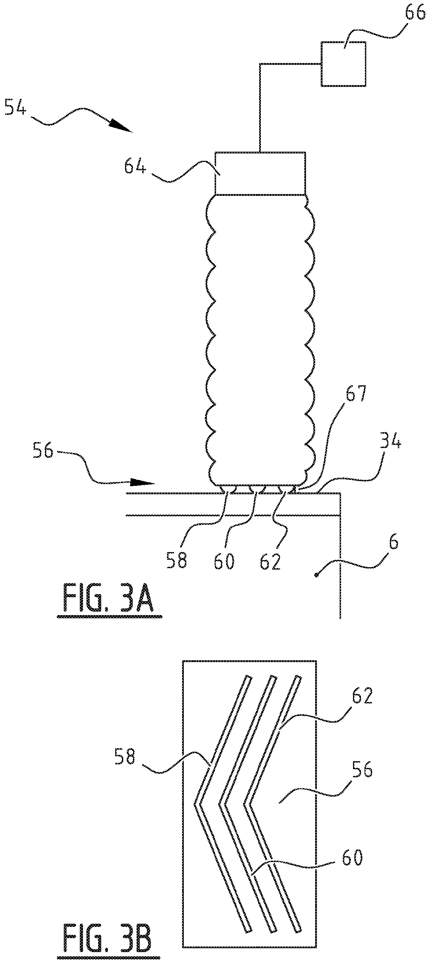

Top seal apparatus 54 can be provided in different embodiments. In one embodiment sealing apparatus is provided with an inflatable sealing element 30 (figures 3A-3B). In the illustrated embodiment bottom 56 of inflatable sealing element 30 is provided with first sealing strip 58, second sealing strip 60, and third sealing strip 62. In the illustrated embodiment, these three sealing strips 58, 60, 62 are made of a rubber material and have a V-shape (figure 3B).

Inflatable sealing element 30 is provided with pump 64 that is activated by controller 66. Optionally, there is provided contact detector 67 that is operatively connected to controller 66. In the illustrated embodiment detector 67 detects contact between sealing strips 58, 60, 62 and provides controller 66 with a detection signal enabling controller 66 to stop pump 64.

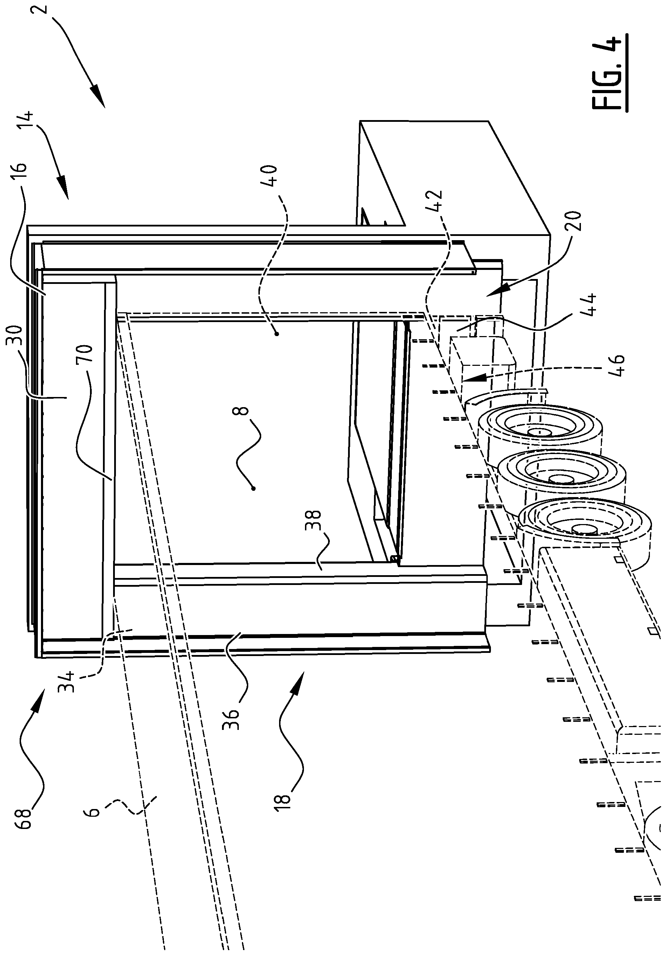

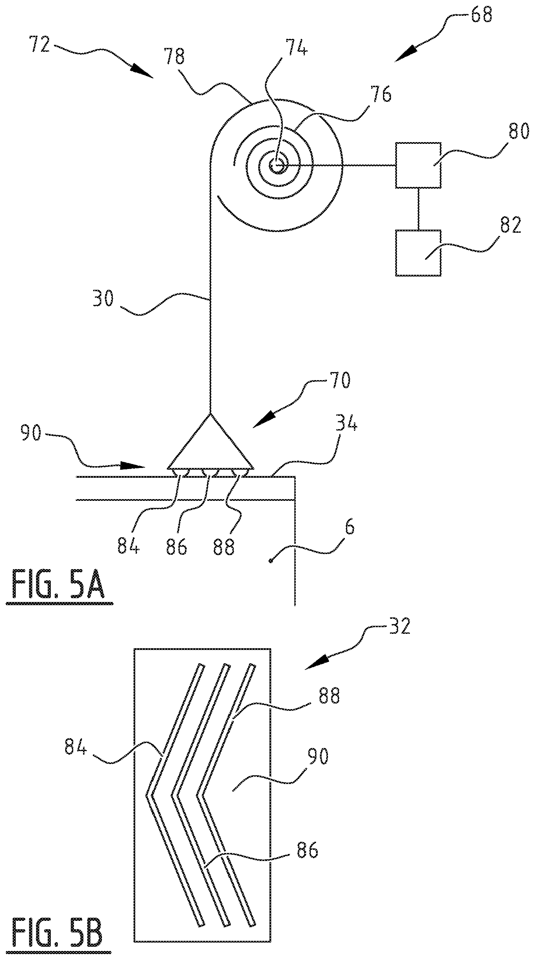

In another embodiment top seal apparatus 68 (figures 4-5) comprises movable sealing element 30 that is provided with bottom end 70. Roller seal 72 comprises shaft 74 that is operatively connected to torsion spring element 76. Roller seal 72 has outer surface 78. Shaft 74 is driven by motor 80 and is operated by controller 82. In the illustrated embodiment bottom 70 is provided with first sealing strip 84, second sealing strip 86 and third sealing strip 88 at its bottom side 90. In the illustrated embodiment sealing strips 84, 86, 88 are provided with a V-shape (figure 5B).

It will be understood that the combination of elements in one or more of the embodiments can be envisaged. For example, top seal 68 can also be provided without sealing strips 84, 86, 88. Sealing element 30 of this alternative top seal can be manufactured from an effective sealing material.

When docking vehicle 6 at dock 2 of distribution centre 4 (figure 1), a distance D is remains between roof 34 of vehicle 6 and the upper edge of dock opening 8. Top seal 16, 54, 68 is activated and moves downwardly in a substantially vertical direction until sealing element 30 contacts roof 34 of vehicle 6. Preferably, sealing strips 58, 60, 62, 84, 86, 88 are positioned on roof surface 34 of vehicle 6. Water on roof 34 of vehicle 6 will be directed sideways and will not reach the rear edge of roof 34 of vehicle 6 thereby preventing safety concerns, for example. Optionally, contact sensor 67 is provided in one or more of the embodiments according to the present invention. Preferably, detector 67 provides a contact signal when sealing element 30 contacts roof 34 of vehicle 6. This signal is preferably provided to controller 66, 82 that controls pump 64 or motor 80, respectively. This provides an effective top seal. After having achieved the desired sealing, goods can be loaded and/or unloaded to and from vehicle 6. After loading/unloading is finished, doors of the vehicle are closed, the sealing is retracted and vehicle 6 may move away from dock 2.

The present invention is by no means limited to the above described preferred embodiments thereof. The rights sought are defined by the following claims within the scope of which many modifications can be envisaged.

## Claims

1. Top seal (16) for a loading/unloading dock (2), the top seal configured for sealing the upper edge of a dock against a roof (34) of a vehicle (6) docked at the dock, the top seal comprising:
- a movable sealing element (30) that is configured for moving in a substantially vertical direction and comprises contact elements (32) for contacting with the roof of the vehicle;
- a drive (64, 80) configured for moving the movable sealing element;
wherein the movable sealing element has a variable working height to adapt to a vehicle height, and wherein the contact elements of the movable sealing element comprises one or more water sealing elements, wherein the water sealing element comprises a water sealing strip (58, 60, 62), and is **characterised in that** the water sealing element has a V-shape or a curved shape configured to guide water sideways,
wherein the legs of the V-shaped water sealing element extend over the roof of the vehicle sideways towards the dock.

2. Top seal according to claim 1, wherein the contact elements comprise two to five, preferably three, water sealing elements.

3. Top seal according to one or more of the foregoing claims, further comprising a contact sensor (67) configured for detecting a contact between the contact elements of the top seal and the vehicle roof.

4. Top seal according to one or more of the foregoing claims, wherein the drive is further configured for maintaining a contact pressure between the contact elements and the roof of the vehicle.

5. Top seal according to one or more of the foregoing claims, wherein the movable sealing element comprises an inflatable seal (30).

6. Top seal according to one or more of the foregoing claims, wherein the movable sealing element comprises a roller seal (72).

7. Top seal according to claim 6, wherein the roller seal comprises a spring element (76).

8. Top seal according to claim 6 or 7, wherein the movable sealing element comprises a weight that in use engages the roof of the vehicle and that pulls or stretches the sealing element.

9. Top seal according to one or more of the foregoing claims, wherein the movable sealing element comprises an insulated structure.

10. Dock (2) provided with a top seal (16) according to one or more of the foregoing claims.

11. Dock (2) according to claim 10, further comprising side seals (18) and a bottom seal (20) that are configured for providing a four-sided sealing assembly (14).

12. Distribution centre (4) comprising a dock (2) with a top seal (16) according to one or more of the foregoing claims.

13. Method for providing a seal between an upper edge of a dock (2) and a roof (34) of a vehicle (6) docked at the dock, the method comprising the steps of:
- providing a top seal (16) according to one or more of claims 1-10;
- activating a drive (64, 80) of the top seal when the vehicle is docked;
- moving the movable sealing element and contacting the roof of the vehicle with contact elements (32); and
- sealing the upper edge of a dock against a roof of a vehicle docked at the dock.

## Patentansprüche

1. Obere Abdichtung (16) für ein Be-/Entladedock (2), wobei die obere Abdichtung konfiguriert ist, um den oberen Rand eines Docks gegen ein Dach (34) eines Fahrzeugs (6), das an dem Dock angedockt ist, abzudichten, wobei die obere Abdichtung aufweist:
- ein bewegliches Abdichtungselement (30), das konfiguriert ist, um sich in einer im Wesentlichen vertikalen Richtung zu bewegen, und das Kontaktelemente (32) zum Kontaktieren des Dachs des Fahrzeugs aufweist;
- einen Antrieb (64, 80), der konfiguriert ist, um das bewegliche Abdichtungselement zu bewegen;
wobei das bewegliche Abdichtungselement eine variable Arbeitshöhe hat, um sich an eine Fahrzeughöhe anzupassen, und
wobei die Kontaktelemente des beweglichen Abdichtungselements ein oder mehrere Wasserabdichtungselemente aufweisen, wobei das Wasserabdichtungselement einen Wasserabdichtungsstreifen (58, 60, 62) aufweist und **dadurch gekennzeichnet ist, dass** das Wasserabdichtungselement eine V-Form oder eine gekrümmte Form hat, die konfiguriert ist, um Wasser seitwärts zu leiten, wobei die Schenkel des V-förmigen Wasserabdichtungselements sich über das Dach des Fahrzeugs seitwärts zu dem Dock erstrecken.

2. Obere Abdichtung nach Anspruch 1, wobei die Kontaktelemente zwei bis fünf, vorzugsweise drei, Wasserabdichtungselemente aufweisen.

3. Obere Abdichtung nach einem oder mehreren der vorhergehenden Ansprüche, die ferner einen Kontaktsensor (67) aufweist, der konfiguriert ist, um einen Kontakt zwischen den Kontaktelementen der oberen Abdichtung und dem Fahrzeugdach zu erfassen.

4. Obere Abdichtung nach einem oder mehreren der vorhergehenden Ansprüche, wobei der Antrieb ferner konfiguriert ist, um einen Kontaktdruck zwischen den Kontaktelementen und dem Dach des Fahrzeugs aufrechtzuerhalten.

5. Obere Abdichtung nach einem oder mehreren der vorhergehenden Ansprüche, wobei das bewegliche Abdichtungselement eine aufblasbare Dichtung (30) aufweist.

6. Obere Abdichtung nach einem oder mehreren der vorhergehenden Ansprüche, wobei das bewegliche Abdichtungselement eine Abdichtungsrolle (72) aufweist.

7. Obere Abdichtung nach Anspruch 6, wobei die Abdichtungsrolle ein Federelement (76) aufweist.

8. Obere Abdichtung nach Anspruch 6 oder 7, wobei das bewegliche Abdichtungselement ein Gewicht aufweist, das im Einsatz an dem Dach des Fahrzeugs angreift und das Dichtungselement zieht oder dehnt.

9. Obere Abdichtung nach einem oder mehreren der vorhergehenden Ansprüche, wobei das bewegliche Abdichtungselement eine isolierte Struktur aufweist.

10. Dock (2), das mit einer oberen Abdichtung (16) nach einem oder mehreren der vorhergehenden Ansprüche versehen ist.

11. Dock (2) nach Anspruch 10, das ferner Seitendichtungen (18) und eine untere Dichtung (20) aufweist, die konfiguriert sind, um eine vierseitige Abdichtungsanordnung (14) bereitzustellen.

12. Verteilungszentrale (4), die ein Dock (2) mit einer oberen Abdichtung (16) nach einem oder mehreren der vorhergehenden Ansprüche aufweist.

13. Verfahren zur Bereitstellung einer Abdichtung zischen einem oberen Rand eines Docks (2) und einem Dach (34) eines Fahrzeugs (6), das an dem Dock angedockt ist, wobei das Verfahren die folgenden Schritte aufweist:
- Bereitstellen einer oberen Abdichtung (16) nach einem oder mehreren der Ansprüche 1 - 10;
- Aktivieren eines Antriebs (64, 80) der oberen Abdichtung, wenn das Fahrzeug angedockt ist;
- Bewegen des beweglichen Dichtungselements und Kontaktieren des Dachs des Fahrzeugs mit Kontaktelementen (32); und
- Abdichten des oberen Rands eines Docks gegen ein Dach eines Fahrzeugs, das an dem Dock angedockt ist.

## Revendications

1. Joint supérieur (16) pour un quai de chargement/déchargement (2), le joint supérieur étant configuré pour étanchéifier le bord supérieur d'un quai par rapport à un toit (34) d'un véhicule (6) mis à quai au niveau du quai, le joint supérieur comprenant :
- un élément d'étanchéité mobile (30) qui est configuré pour se déplacer dans une direction sensiblement verticale et comprend des éléments de contact (32) pour entrer en contact avec le toit du véhicule ;
- un entraînement (64, 80) configuré pour déplacer l'élément d'étanchéité mobile ;
dans lequel l'élément d'étanchéité mobile présente une hauteur de travail variable pour s'adapter à une hauteur de véhicule, et
dans lequel les éléments de contact de l'élément d'étanchéité mobile comprennent un ou plusieurs éléments d'étanchéité à l'eau, dans lequel l'élément d'étanchéité à l'eau comprend une bande d'étanchéité à l'eau (58, 60, 62) et est **caractérisé en ce que** l'élément d'étanchéité à l'eau présente une forme de V ou une forme courbe configurée pour guider l'eau latéralement,
dans lequel les pattes de l'élément d'étanchéité à l'eau en forme de V s'étendent au-dessus du toit du véhicule latéralement en direction du quai.

2. Joint supérieur selon la revendication 1, dans lequel les éléments de contact comprennent deux à cinq, de préférence trois, éléments d'étanchéité à l'eau.

3. Joint supérieur selon l'une ou plusieurs des revendications précédentes, comprenant en outre un capteur de contact (67) configuré pour détecter un contact entre les éléments de contact du joint supérieur et le toit de véhicule.

4. Joint supérieur selon l'une ou plusieurs des revendications précédentes, dans lequel l'entraînement est configuré en outre pour maintenir une pression de contact entre les éléments de contact et le toit du véhicule.

5. Joint supérieur selon l'une ou plusieurs des revendications précédentes, dans lequel l'élément d'étanchéité mobile comprend un joint gonflable (30).

6. Joint supérieur selon l'une ou plusieurs des revendications précédentes, dans lequel l'élément d'étanchéité mobile comprend un joint à rouleau (72).

7. Joint supérieur selon la revendication 6, dans lequel le joint à rouleau comprend un élément à ressort (76) .

8. Joint supérieur selon la revendication 6 ou 7, dans lequel l'élément d'étanchéité mobile comprend un poids qui lors d'une utilisation est en prise avec le toit du véhicule et qui tire ou étire l'élément d'étanchéité.

9. Joint supérieur selon l'une ou plusieurs des revendications précédentes, dans lequel l'élément d'étanchéité mobile comprend une structure isolée.

10. Quai (2) pourvu d'un joint supérieur (16) selon l'une ou plusieurs des revendications précédentes.

11. Quai (2) selon la revendication 10, comprenant en outre des joints latéraux (18) et un joint inférieur (20) qui sont configurés pour fournir un ensemble d'étanchéité à quatre côtés (14).

12. Centre de distribution (4) comprenant un quai (2) avec un joint supérieur (16) selon l'une ou plusieurs des revendications précédentes.

13. Procédé pour fournir un joint entre un bord supérieur d'un quai (2) et un toit (34) d'un véhicule (6) mis à quai au niveau du quai, le procédé comprenant les étapes de :
- fourniture d'un joint supérieur (16) selon l'une ou plusieurs des revendications 1-10 ;
- activation d'un entraînement (64, 80) du joint supérieur lorsque le véhicule est mis à quai ;
- déplacement de l'élément d'étanchéité mobile et mise en contact du toit du véhicule avec des éléments de contact (32) ; et
- étanchéification du bord supérieur d'un quai par rapport à un toit d'un véhicule mis à quai au niveau du quai.
